# EUROPEAN PATENT SPECIFICATION

(11) **EP 3 055 457 B1**
(45) Date of publication and mention of the grant of the patent: **21.02.2024**
(21) Application number: 13895120.7
(22) Date of filing: 11.10.2013
(51) Int. Cl.: D21H 21/42, G09F 3/02

(54) **OPTICALLY VARIABLE SECURITY THREADS AND STRIPES**
OPTISCH VARIABLE SICHERHEITSFÄDEN UND -STREIFEN
FILS ET BANDES DE SÉCURITÉ À VARIATION OPTIQUE

(43) Date of publication of application: 17.08.2016
(73) Proprietor: SICPA HOLDING SA, 1008 Prilly (CH); CHINA BANKNOTE SICPA SECURITY INK CO., LTD., Bejing Economic & Technological Development Area Bejing 100176 (CN)
(72) Inventor: RITTER, Gebhard, 1007 Lausanne (CH); LI, Xiang, Beijing 100176 (CN); DEGOTT, Pierre, 1073 Mollie-Margot (CH); YUAN, Fang, Beijing 100054 (CN)
(74) Representative: Hoffmann Eitle
(86) International application number: PCT/CN2013/085015
(87) International publication number: WO 2015/051523

(56) References cited:
- EP-A1- 1 832 439
- EP-A1- 1 880 866
- EP-A2- 2 465 701
- WO-A1-2008/017869
- WO-A1-2011/107527
- CN-A- 1 586 917
- CN-A- 102 083 632
- CN-A- 102 935 769
- CN-A- 102 956 147
- DE-A1-102008 009 296
- US-A- 5 059 245
- US-A1- 2004 241 404

## Description

### FIELD OF THE INVENTION

The present invention relates to the field of the protection of value documents and value commercial goods against counterfeit and illegal reproduction. In particular, the present invention relates to optically variable security threads or stripes to be incorporated into or onto security documents, said security threads or stripes exhibiting highly dynamic visual motion effect upon tilting.

### BACKGROUND OF THE INVENTION

With the constantly improving quality of color photocopies and printings and in an attempt to protect security documents such as banknotes, value documents or cards, transportation tickets or cards, tax banderols, and product labels against counterfeiting, falsifying or illegal reproduction, it has been the conventional practice to incorporate various security means in these documents. Typical examples of security means include security threads or stripes, windows, fibers, planchettes, foils, decals, holograms, watermarks, security inks comprising optically variable pigments, magnetic or magnetizable thin film interference pigments, interference-coated particles, thermochromic pigments, photochromic pigments, luminescent, infrared-absorbing, ultraviolet-absorbing or magnetic compounds.

Security threads embedded in the substrate are known to those skilled in the art as an efficient means for the protection of security documents and banknotes against imitation. Reference is made to US 0,964,014; US 4,652,015; US 5,068,008; US 5,324,079; WO 90/08367 A1; WO 92/11142 A1; WO 96/04143 A1; WO 96/39685 A1; WO 98/19866 A1; EP 0 021 350 A1; EP 0 185 396 A2; EP 0 303 725 A1; EP 0 319 157 A2; EP 0 518 740 A1; EP 0 608 078 A1; and EP 1 498 545 A1. A security thread is a metal- or plastic-filament, which is incorporated during the manufacturing process into the substrate serving for printing security documents or banknotes. Security threads or stripes carry particular security elements, serving for the public- and/or machine-authentication of the security document, in particular for banknotes. Suitable security elements for such purpose include without limitation metallizations, optically variable compounds, luminescent compounds, micro-texts and magnetic features.

With the aim of protecting value documents such as banknotes from being forged, optically variable security threads or stripe exhibiting color shift or color change upon variation of the angle of observation have been proposed as security features to be incorporated into or onto said value documents. The protection from forgery is based on the variable color effect that optically variable security elements convey to the viewer in dependence on the viewing angle or direction.

US 2007/0241553 discloses security elements for securing valuable articles having an optically variable layer that imparts different color impressions at different viewing angles and, in a covering area, a semi-transparent ink layer disposed on top of the optically variable, the color impression of the optically variable layer being coordinated with the color impression of the semi-transparent ink layer in the covering area when viewed under predefined viewing conditions.

WO 2007/042865 A1 discloses security elements comprising at least two contiguous areas having an identical or different optically variable coloring. The disclosed security element further comprises a single graphic marking which crosses with continuity the two areas having variable coloring so that the graphic marking straddles the two areas and is perfectly aligned.

EP 2 465 701 A2 discloses security elements for securing valuable articles comprising a stack layer made of an optically variable layer that conveys different color impressions at different viewing angles, a first portion with a first color-constant impression and a second color-constant impression and an individualizing marking. The optically variable layer and the two portions exhibiting two color-constant impressions are stacked in a covering region. The disclosed different layers are coordinated so that the color impression of the optically variable layer matches at a predetermined first viewing angle the color impression of the first portion and that the color impression of the optically variable layer matches at a predetermined second viewing angle being different from the first viewing angle the color impression of the second portion.

Alternatively or in addition to the protection against counterfeit or illegal reproduction obtained by the optically variable properties described hereabove, security threads or stripes comprising holographic structures have been developed. Commonly used processes for producing such optically variable threads comprising an holographic structure consist of laminating a partially demetalized hologram layer on top of a fully coated color-shifting layer; such lamination leading to highly thick security threads which may cause difficulties during the integration of said threads in paper.

WO 2004/048120 A1 discloses security elements comprising at least two adjacent regions, wherein one of the regions is an optically variable and the other region has a layer of material with constant reflection. The disclosed security element comprises regions forming areas without material in order to form graphic makings, characters and the like that can be detected visually. The disclosed optically variable layer of material may be constituted by holographic material such as for example a holographic lacquer over which an embossing is performed in order to impress a holographic image.

US 8,534,710 discloses security threads comprising a stack layer made of an optically variable layer that conveys different color impressions at different viewing angles, and a color-constant layer comprising an ink layer and a metal layer. The optically variable layer and the color-constant layer are stacked in a covering region, while at most one of the optically variable layer and the color-constant layer is present outside the covering region. The color impression of the stacked layers in the covering region and the color impression of the one layer outside the covering region are matched with each other when viewed at a predetermined viewing angle. It is further disclosed that a diffractive embossing pattern may be embossed in the optically variable layer so as to realize so-called colorshifting holograms, for example, in which the colorshifting effect of the optically variable layer is combined with a holographic effect.

US 8,381,988 discloses security threads comprising a first and a second layer of a colourshifting material at least partially overlying each other and each having different colourshifting properties and, at least partially applied over an exposed surface of one of the colourshifting layers, a light control layer which may be a microprismatic film prepared by coating the colourshifting layer with a thermoplastic embossing lacquer and then using an embossing tool to create the light control structure with the application of heat and pressure.

US 2011/0012337 discloses security threads in which a) a colorshifting thin-film element in the form of an absorber layer, a dielectric layer and reflection layer and b) a relief pattern present in an embossing lacquer layer are stacked. The disclosed embossing lacquer layer having the relief pattern is metalized only in sub-regions so that the colorshifting thin-film element is visible when observed from the side of the relief pattern through the non-metal metalized sub-regions. However, the disclosed security threads comprising a non-printed colorshifting thin-film element may suffer from a low flexibility in terms of design and color combinations.

DE 10 2008 009 296 A1 discloses a security element for protecting valuable objects comprising an optically variable layer and an absorber layer having gaps in which a viewing angle dependent color of the optically variable layer is visible.

EP 1 880 866 A1 relates to a security element comprising a transparent substrate and a magnetically oriented image coating on the substrate.

WO 2008/017869 A1 describes an optically variable security device comprising a photonic crystal by which incident light is selectively reflected. CN 1029 56147 discloses anti-false film comprising a succesively stacked substrate layer (1) with a brightness enhancement layer (3) and a hologram image layer (2).

A need remains for providing sophisticated security threads or stripes combining high visual attractiveness with a highly sophisticated design so as to further increase the resistance against counterfeiting or illegal reproduction of security documents comprising said security threads or stripes.

### SUMMARY

Accordingly, it is an object of the present invention to overcome the deficiencies of the prior art as discussed above. The present invention is defined in the current claim 1.

Also described, but not claimed herein, are processes for making the security thread described herein.

Also described and claimed therein are processes for making a security thread or stripe described herein and further comprising a transparent substrate, said process comprising a step of laminating a first structure comprising the substrate described herein and the holographic metallic layer described herein with a second structure comprising the transparent substrate described herein, the optically variable layer described herein and the color constant layer recited in described herein.

Also described and claimed therein are uses of the security thread or stripe recited described herein for the protection of a security document against counterfeiting, fraud or illegal reproduction as well as security documents comprising the security thread or stripe described herein.

Also described and claimed therein are processes for producing the security document described herein, said process comprising the steps of:
a) producing the security thread or stripe described herein, preferably by the process described herein, and
b) at least partially embedding in said security document the security thread or stripe obtained under step a) or mounting the security thread or stripe obtained under step a) on the surface of the security document.

The combination of the specific layers described herein provides the security thread more varieties in visual effects in comparison with traditional holographic threads of the prior art. Such a combination enhances the security and visibility of the security thread or stripe and thus increases the difficulty of the counterfeiting.

### BRIEF DESCRIPTION OF DRAWINGS

Figures 1-3 schematically depict cross sections of security threads and stripes according to the present invention according to several exemplary embodiments.
Figures 4-7 schematically depict top views of security threads and stripes according to the present invention according to several exemplary embodiments.
Figures 8A-C depict cross sections of security documents comprising a security thread and stripe according to the present invention according to several exemplary embodiments.

### DETAILED DESCRIPTION

The following definitions are to be used to interpret the meaning of the terms discussed in the description and recited in the claims.

As used herein, the article "a" indicates one as well as more than one and does not necessarily limit its referent noun to the singular.

As used herein, the term "about" in conjunction with an amount or value means that the amount or value in question may be the specific value designated or some other value in its neighborhood.

As used herein, the term "and/or" means that either all or only one of the elements of said group may be present. For example, "A and/or B" shall mean "only A, or only B, or both A and B". In the case of "only A", the term also covers the possibility that B is absent, i.e. "only A, but not B". In case of "only B", the term also covers the possibility that A is absent, i.e. "only B, but not A".

As used herein, the term "at least" is meant to define one or more than one, for example one or two or three.

The term "comprising" as used herein is intended to be non-exclusive and open-ended. Thus, for instance a composition comprising a compound A may include other compounds besides A.

A thread or stripe consists of an elongated security element. By "elongated", it is meant that the dimension of the security element in the longitudinal direction is more than twice as large as its dimension in the transverse direction.

As used herein, the term "indicia" shall mean discontinuous layers such as patterns, including without limitation symbols, alphanumeric symbols, motifs, geometric patterns, letters, words, numbers, logos and drawings.

As used herein, the term "pigment" is to be understood according to the definition given in DIN 55943: 1993-11 and DIN EN 971-1: 1996-09. Pigments are materials in powder or flake form which are -contrary to dyes- not soluble in the surrounding medium.

As used herein, the terms "match" or "matched" is to be understood to mean that two color impressions substantially appear to be identical.

The security threads or stripes according to the present invention combine different color areas that, under predefined viewing conditions, seem very similar or identical and that seem different when the security threads or stripe are tilted thus conferring a high counterfeit or illegal reproduction resistance.

Optically variable elements are known in the field of security printing. Optically variable elements (also referred in the art as goniochromatic elements or colorshifting elements) exhibit a viewing-angle or incidence-angle dependent color, and are used to protect banknotes and other security documents against counterfeiting and/or illegal reproduction by commonly available color scanning, printing and copying office equipment. The optically variable layer described herein imparts a different color impression at different viewing angles By "different color impression", it is meant that the element exhibits a difference of at least one parameter of the CIELAB(1976) system, preferably exhibits a different "a*" value or a different "b*" value or different "a*" and "b*" values at different viewing angles.

For example, layers or coatings comprising optically variable pigment particles exhibit a colorshift upon variation of the viewing angle (e.g. from a viewing angle of about 90° with respect to the plane of the layer or coating to a viewing angle of about 22.5° with respect to the plane of the layer or coating) from a color impression CI1 (e.g. gold) to a color impression CI2 (green). In addition to the overt security provided by the colorshifting property which allows an easy detection, recognition and/or discrimination of the security threads or stripes described herein from their possible counterfeits with the unaided human senses, the colorshifting property may be used as a machine readable tool for the recognition of the security threads or stripes. Thus, the colorshifting properties may simultaneously be used as a covert or semi-covert security feature in an authentication process wherein the optical (e.g. spectral) properties of the security thread or stripe are analyzed. Thus, the colorshifting properties of the optically variable pigment particles may simultaneously be used as a covert or semi-covert security feature in an authentication process wherein the optical (e.g. spectral) properties of the particles are analyzed.

On the contrary to the optically variable layer that exhibits different colors or color impressions upon variation of the viewing angle, the color constant layer described herein consists of a layer that do not exhibit a color change or color impression change upon variation of the viewing angle.

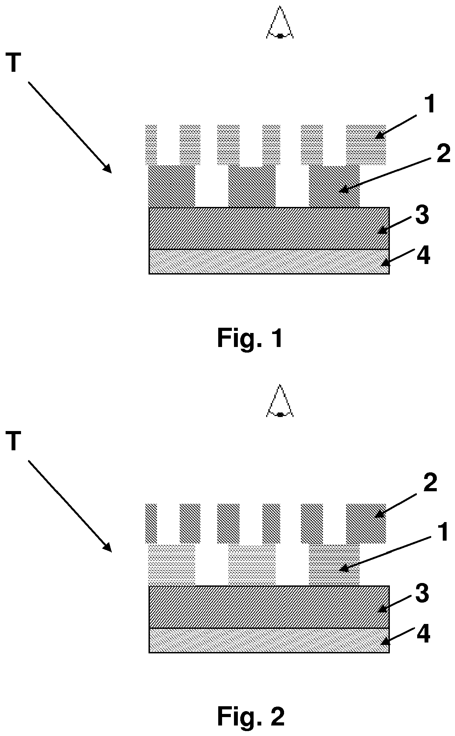

The security thread or stripe described herein comprises the substrate described herein, the optically variable layer described herein, the color constant layer and the holographic metallic layer described herein, wherein i) the holographic metallic layer faces the substrate, ii) the color constant layer and the optically variable layer are present on top of the holographic metallic layer and iii) the color constant layer and/or the optically variable layer faces the environment, and wherein the optically variable layer, the color constant layer and the holographic metallic layer are at least partially jointly visible from the side of the security thread or stripe comprising the optically variable layer and/or the color constant layer (see eyes in Figures 1, 2, 3 and 8).

According to one embodiment and as shown in Figure 1, the security thread or stripe (T) described herein comprises the substrate (4) described herein, the optically variable layer (1) described herein, the color constant layer (2) and the holographic metallic layer (3) described herein, wherein the holographic metallic layer (3) faces the substrate (4), wherein the optically variable layer (1) faces the environment and wherein the color constant layer (2) faces the holographic metallic layer (3) and the optically variable layer (1). In other words, the optically variable layer (1) is disposed on top of color constant layer (2), the color constant layer (2) is disposed on top of the holographic metallic layer (3) and the holographic metallic layer (3) is disposed on top of the substrate (4) described herein. Moreover, the optically variable layer (1) described herein, the color constant layer (2) and the holographic metallic layer (3) described herein are at least partially jointly visible from the side of the security thread or stripe comprising the optically variable layer and/or the color constant layer (see the eye in Figure 1).

According to another embodiment and as shown in Figure 2, the security thread or stripe (T) described herein comprises the substrate (4) described herein, the optically variable layer (1) described herein, the color constant layer (2) and the holographic metallic layer (3) described herein, wherein the holographic metallic layer (3) faces the substrate (4), wherein the color constant layer (2), faces the environment, and wherein the optically variable layer (1) faces the holographic metallic layer (3) and the color constant layer (2). In other words, the color constant layer (2) is disposed on top of the optically variable layer (1), the optically variable layer (1) is disposed on top of the holographic metallic layer (3) and the holographic metallic layer (3) is disposed on top of the substrate (4) described herein. Moreover, the optically variable layer (1) described herein, the color constant layer (2) and the holographic metallic layer (3) described herein are at least partially jointly visible from the side of the security thread or stripe comprising the optically variable layer and/or the color constant layer (see the eye in Figure 2).

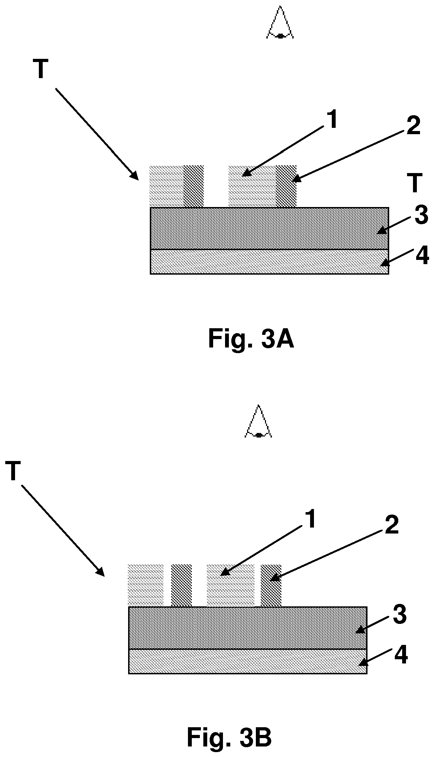

According to another embodiment as shown in Figures 3A-B, the security thread or stripe (T) described herein comprises the substrate (4) described herein, the optically variable layer (1) described herein, the color constant layer (2) and the holographic metallic layer (3) described herein, wherein the holographic metallic layer (3) faces the substrate (4), wherein the optically variable layer (1) is adjacent to the color constant layer (2) and wherein both layers face the holographic metallic layer (3). In other words, the optically variable layer (1) is adjacent to the color constant layer (2), the optically variable layer (1) and the color constant layer (2) are both disposed on top of the holographic metallic layer (3) and the holographic metallic layer (3) is disposed on top of the substrate (4) described herein. Moreover, the optically variable layer (1) described herein, the color constant layer (2) and the holographic metallic layer (3) described herein are at least partially jointly visible from the side of the security thread or stripe comprising the optically variable layer and/or the color constant layer (see the eye in Figures 3A-B). As shown in Figures 3A, the security thread or stripe described herein may comprise the optically variable layer (1) being adjacent and in direct contact with the color constant layer (2). As shown in Figure 3B, the security thread or stripe described herein may comprise the optically variable layer (1) being adjacent and not in direct contact with the color constant layer (2).

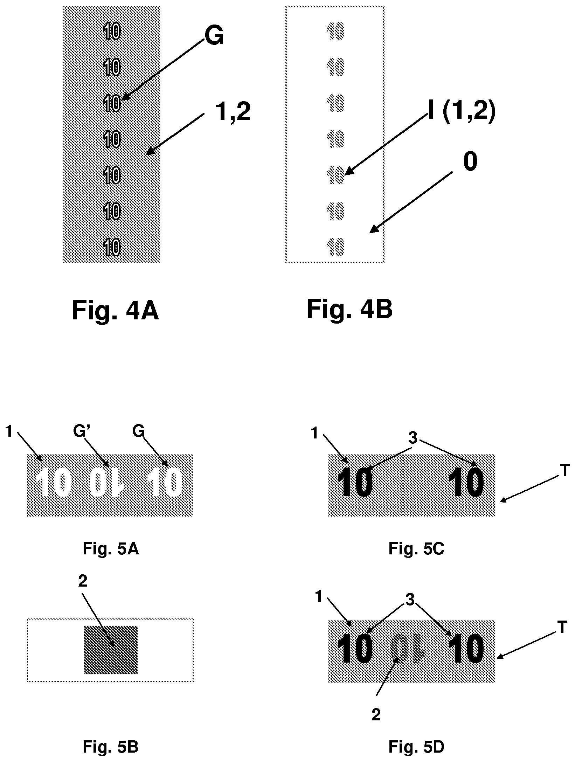

When the color constant layer (2) and/or the optically variable layer (1) comprises one or more gaps (G in Figure 4A) in the form of indicia, said gaps consist of regions lacking the color constant layer (2) or the optically variable layer (1) as the case may be. The optically variable layer (1) and the color constant layer (2) (when comprising one or more gaps in the form of indicia) comprise material-free areas in the form of indicia. In other words, the optically variable layer (1) and the color constant layer (2) (when comprising one or more gaps in the form of indicia) described herein comprise negative writing in the form of indicia. As used herein, the term "negative writing" refers to material-free areas in an otherwise continuous layer. When the optically variable layer (1) and/or the color constant layer (2) comprise one or more gaps in the form of indicia, said one or more gaps allow an observer to see the holographic metallic layer through the one or more gaps (G). Preferably, the indicia are independently selected from the group consisting of symbols, alphanumeric symbols, motifs, geometric patterns, letters, words, numbers, logos, drawings and combinations thereof.

When the optically variable layer (1) and/or the color constant layer (2) consist of indicia (I in Figure 4B) made of the optically variable composition or the color constant composition as the case may be, one or more regions lacking the optically variable layer and/or the color constant layer (0 in Figure 4B) are present outside the indicia. When the optically variable layer (1) and/or the color constant layer (2) consist of indicia made of the optically variable composition or the color constant composition as the case may be, the presence of one or more regions lacking the optically variable composition and/or the color constant composition as the case may be outside the indicia allow an observer to see the holographic metallic layer through the one or more regions lacking the optically variable composition or the color constant composition as the case may be.

Figures 5C-D schematically illustrate (top views) a security thread (T) comprising an optically variable layer (1) and a color constant layer (2) at a first viewing angle (Figure 5C) and at a second viewing angle (Figure 5D). As exemplified in Figure 5A (partial structure), the optically variable layer (1) comprises gaps in the form of indicia, said gaps may have the same shape or may have different shapes (G and G'), and exhibits a colorshift upon variation of the viewing angle (e.g. from an orthogonal view to a grazing view) from a color impression CI1 (e.g. gold) to a color impression CI2 (green). As exemplified in Figure 5B (partial structure), the color constant layer (2) consists of indicia (square) made of a color constant composition having a color matching the color impression of the optically variable layer at a predetermined viewing angle (e.g. gold). In Figures 5C-D, the optically variable layer (1) and the color constant layer (2) are coordinated in such a way that at least for a part of the security thread or stripe described herein, for example:
a1) see Figure 5D, at a predetermined viewing angle (for example at the grazing view), two kinds of indicia (made of the layers 2 and 3) which may have the same shape or may have different shapes may be observed since the color impression of the optically variable layer (1) at this viewing angle does not match with the color impression of the color constant layer (2) in such a way that, for the viewer,
the optically variable layer (1), the color constant layer (2) (through the gaps G') and the holographic metallic layer (3) (through the gaps G and G') are jointly visible from the side of the security thread or stripe comprising the optically variable layer and/or the color constant layer, and
a2) see Figure 5C, at a different predetermined viewing angle (for example at the orthogonal view), a single kind of indicia (3) may be observed since the color impression of the optically variable layer (1) at this viewing angle is matched with the color impression of the color constant layer (2) in such a way that, for the viewer, the optically variable layer (1) and the holographic metallic layer (3) (through the gaps G) are jointly visible from the side of the security thread or stripe comprising the optically variable layer and/or the color constant layer, whereas the indicia made of the color constant layer (2) is not visible due to its matching with the color impression of the optically variable layer (1).

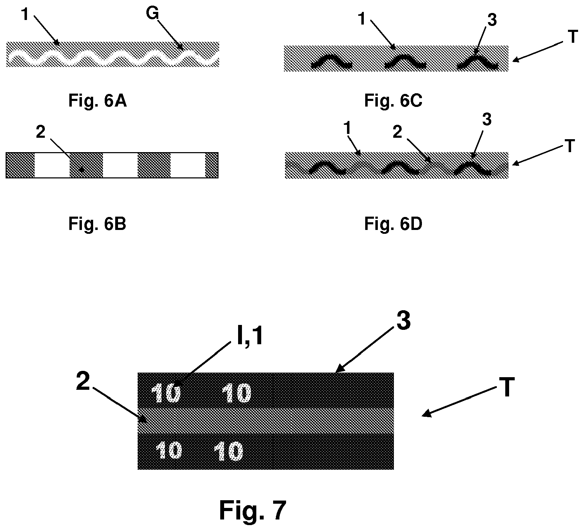

Figures 6C-D schematically illustrate (top views) a security thread (T) comprising an optically variable layer (1) and a color constant layer (2) at a first viewing angle (Figure 6C) and a second viewing angle (6D). As exemplified in Figure 6A (partial structure), the optically variable layer (1) comprises a gap in the form of a wave (G) and exhibits a colorshift upon variation of the viewing angle (e.g. from an orthogonal view to a grazing view) from a color impression CI1 (e.g. gold) to a color impression CI2 (green). As exemplified in Figure 6B (partial structure), the color constant layer (2) consists of indicia (squares) made of the color constant composition having a color matching the color impression of the optically variable layer at a predetermined viewing angle (e.g. gold). In Figures 6C-D, the optically variable layer (1) and the color constant layer (2) are coordinated in such a way that at least for a part of the security thread or stripe described herein, for example:
b1) see Figure 6D, at a predetermined viewing angle (for example at the grazing view), a continuous wave made of two kinds of indicia (made of the layers 2 and 3) may be observed since the color impression of the optically variable layer (1) at this viewing angle does not match with the color impression of the color constant layer (2) in such a way that, for the viewer, the optically variable layer (1), the color constant layer (2) (through the gap G) and the holographic metallic layer (3) (through the gap G) are jointly visible from the side of the security thread or stripe comprising the optically variable layer and/or the color constant layer,
   and
b2) see Figure 6C, at a different predetermined viewing angle (for example at the orthogonal view), a discontinuous wave of one color made of a single kind of indicia (3) may be observed since the color impression of the optically variable layer (1) at this viewing angle is matched with the color impression of the color constant layer (2) in such a way that, for the viewer, the optically variable layer (1) and the holographic metallic layer (3) (through the gap G) are jointly visible from the side of the security thread or stripe comprising the optically variable layer and/or the color constant layer, whereas the indicia made of the color constant layer (2) is not visible due to its matching with the color impression of the optically variable layer (1).

Figure 7 schematically illustrates (top view) a security thread (T) comprising an optically variable layer (I, 1) consisting of indicia (having the shape of "10") made of the optically variable composition, a color constant layer (2) consisting of indicia (rectangular pattern) made of the color constant composition and a holographic metallic layer (3). The holographic metallic layer (3) is visible through the one or more regions lacking the optically variable composition (I, 1) and the color constant layer (2). The security thread or stripe depicted in Figure 7 may further comprise one or more gaps in the color constant layer (2) (not shown in Figure 7) and/or may further comprise indicia made of the optically variable composition on the color constant layer (2) (not shown in Figure 7).

The optically variable layer described herein is made of an optically variable composition comprising from about 2 to about 40 wt-%, preferably from about 10 to about 35 wt-% of optically variable pigments, the weight percents being based on the total weight of the optically variable composition. The optically variable pigment particles are preferably selected from the group consisting of thin film interference pigments, magnetic thin film interference pigments, interference coated pigments, interference coated pigment particles comprising a magnetic material and mixtures thereof.

The optically variable pigments described herein may be surface treated so as to protect them against any deterioration that may occur in the optically variable composition and/or to facilitate their incorporation in the variable composition; typically corrosion inhibitor materials and/or wetting agents may be used.

Suitable thin-film interference pigments exhibiting optically variable characteristics are known to those skilled in the art and disclosed in US 4,705,300; US 4,705,356; US 4,721,271; US 5,084,351; US 5,214,530; US 5,281,480; US 5,383,995; US 5,569,535, US 5,571624 and in the documents related to these. When at least a part of the optically variable pigment particles is constituted by thin film interference pigments, it is preferred that the thin film interference pigments comprise a Fabry-Perot reflector/dielectric/absorber multilayer structure and more preferably a Fabry-Perot absorber/dielectric/reflector/dielectric/absorber multilayer structure, wherein the absorber layers are partially transmitting and partially reflecting, the dielectric layers are transmitting and the reflective layer is reflecting the incoming light. Preferably, the reflector layer is made from one or more materials selected from the group consisting of metals, metal alloys and combinations thereof, preferably selected from the group consisting of reflective metals, reflective metal alloys and combinations thereof and more preferably selected from the group consisting of aluminum (Al), chromium (Cr), nickel (Ni), and mixtures thereof and still more preferably aluminum (Al). Preferably, the dielectric layers are independently made of one or more materials selected from the group consisting of magnesium fluoride (MgF₂), silicium dioxide (SiO₂) and mixtures thereof and more preferably magnesium fluoride (MgF₂). Preferably, the absorber layers are independently made of one or more materials selected from the group consisting of chromium (Cr), nickel (Ni), metallic alloys and mixtures thereof and more preferably chromium (Cr). When at least a part of the optically variable pigment particles is constituted by thin film interference pigments, it is particularly preferred that the thin film interference pigments comprise a Fabry-Perot absorber/dielectric/reflector/dielectric/absorber multilayer structure consisting of a Cr/MgF₂/Al/MgF₂/Cr multilayer structure.

Magnetic thin film interference pigment particles are known to those skilled in the art and are disclosed e.g. in US 4,838,648; WO 2002/073250 A2; EP 0 686 675 B1; WO 2003/000801 A2; US 6,838,166; WO 2007/131833 A1; EP 2 402 401 A1 and in the documents cited therein. Preferably, the magnetic thin film interference pigment particles comprise pigment particles having a five-layer Fabry-Perot multilayer structure and/or pigment particles having a six-layer Fabry-Perot multilayer structure and/or pigment particles having a seven-layer Fabry-Perot multilayer structure.

Preferred five-layer Fabry-Perot multilayer structures consist of absorber/dielectric/reflector/dielectric/absorber multilayer structures wherein the reflector and/or the absorber is also a magnetic layer, preferably the reflector and/or the absorber is a magnetic layer comprising nickel, iron and/or cobalt, and/or a magnetic alloy comprising nickel, iron and/or cobalt and/or a magnetic oxide comprising nickel (Ni), iron (Fe) and/or cobalt (Co).

Preferred six-layer Fabry-Perot multilayer structures consist of absorber/dielectric/reflector/magnetic/dielectric/absorber multilayer structures.

Preferred seven-layer Fabry Perot multilayer structures consist of absorber/dielectric/reflector/magnetic/reflector/dielectric/absorber multilayer structures such as disclosed in US 4,838,648.

Preferably, the reflector layers described herein are independently made from one or more materials selected from the group consisting of metals and metal alloys, preferably selected from the group consisting of reflective metals and reflective metal alloys, more preferably selected from the group consisting of aluminum (Al), silver (Ag), copper (Cu), gold (Au), platinum (Pt), tin (Sn), titanium (Ti), palladium (Pd), rhodium (Rh), niobium (Nb), chromium (Cr), nickel (Ni), and alloys thereof, even more preferably selected from the group consisting of aluminum (Al), chromium (Cr), nickel (Ni) and alloys thereof, and still more preferably aluminum (Al). Preferably, the dielectric layers are independently made from one or more materials selected from the group consisting of metal fluorides such as magnesium fluoride (MgF₂), aluminum fluoride (AlF₃), cerium fluoride (CeF₃), lanthanum fluoride (LaF₃), sodium aluminum fluorides (e.g. Na₃AlF₆), neodymium fluoride (NdF₃), samarium fluoride (SmF₃), barium fluoride (BaF₂), calcium fluoride (CaF₂), lithium fluoride (LiF), and metal oxides such as silicium oxide (SiO), silicium dioxide (SiO₂), titanium oxide (TiO₂), aluminum oxide (Al₂O₃), more preferably selected from the group consisting of magnesium fluoride (MgF₂) and silicium dioxide (SiO₂) and still more preferably magnesium fluoride (MgF₂). Preferably, the absorber layers are independently made from one or more materials selected from the group consisting of aluminum (Al), silver (Ag), copper (Cu), palladium (Pd), platinum (Pt), titanium (Ti), vanadium (V), iron (Fe) tin (Sn), tungsten (W), molybdenum (Mo), rhodium (Rh), Niobium (Nb), chromium (Cr), nickel (Ni), metal oxides thereof, metal sulfides thereof, metal carbides thereof, and metal alloys thereof, more preferably selected from the group consisting of chromium (Cr), nickel (Ni), metal oxides thereof, and metal alloys thereof, and still more preferably selected from the group consisting of chromium (Cr), nickel (Ni), and metal alloys thereof. Preferably, the magnetic layer comprises nickel (Ni), iron (Fe) and/or cobalt (Co); and/or a magnetic alloy comprising nickel (Ni), iron (Fe) and/or cobalt (Co); and/or a magnetic oxide comprising nickel (Ni), iron (Fe) and/or cobalt (Co). When magnetic thin film interference pigment particles comprising a seven-layer Fabry-Perot structure are preferred, it is particularly preferred that the magnetic thin film interference pigment particles comprise a seven-layer Fabry-Perot absorber/dielectric/reflector/magnetic/reflector/dielectric/absorber multilayer structure consisting of a Cr/MgF₂/Al/Ni/Al/MgF₂/Cr multilayer structure.

The magnetic thin film interference pigment particles described herein may be multilayer pigment particles being considered as safe for human health and the environment and being based for example on five-layer Fabry-Perot multilayer structures, six-layer Fabry-Perot multilayer structures and seven-layer Fabry-Perot multilayer structures, wherein said pigment particles include one or more magnetic layers comprising a magnetic alloy having a substantially nickel-free composition including about 40 wt-% to about 90 wt-% iron, about 10 wt-% to about 50 wt-% chromium and about 0 wt-% to about 30 wt-% aluminum. Typical examples of multilayer pigment particles being considered as safe for human health and the environment can be found in EP 2 402 401 A1 which is hereby incorporated by reference in its entirety.

Thin film interference pigment particles and magnetic thin film interference pigment particles described herein are typically manufactured by a conventional deposition technique of the different required layers onto a web. After deposition of the desired number of layers, e.g. by physical vapor deposition (PVD), chemical vapor deposition (CVD) or electrolytic deposition, the stack of layers is removed from the web, either by dissolving a release layer in a suitable solvent, or by stripping the material from the web. The so-obtained material is then broken down to flakes which have to be further processed by grinding, milling (such as for example jet milling processes) or any suitable method so as to obtain pigment particles of the required size. The resulting product consists of flat flakes with broken edges, irregular shapes and different aspect ratios. Further information on the preparation of suitable pigment particles can be found e.g. in EP 1 710 756 A1 and EP 1 666 546 A1

Suitable interference coated pigments include without limitation structures consisting of a substrate selected from the group consisting of metallic cores such as titanium, silver, aluminum, copper, chromium, iron, germanium, molybdenum, tantalum or nickel coated with one or more layers made of metal oxides as well as structure consisting of a core made of synthetic or natural micas, other layered silicates (e.g. talc, kaolin and sericite), glasses (e.g. borosilicates), silicium dioxides (SiO₂), aluminum oxides (Al₂O₃), titanium oxides (TiO₂), graphites and mixtures thereof coated with one or more layers made of metal oxides (e.g. titanium oxides, zirconium oxides, tin oxides, chromium oxides, nickel oxides, copper oxides and iron oxides), the structures described hereabove have been described for example in Chem. Rev. 99 (1999), G. Pfaff and P. Reynders, pages 1963-1981 and WO 2008/083894. Typical examples of these interference coated pigments include without limitation silicium oxide cores coated with one or more layers made of titanium oxide, tin oxide and/or iron oxide; natural or synthetic mica cores coated with one or more layers made of titanium oxide, silicium oxide and/or iron oxide, in particular mica cores coated with alternate layers made of silicium oxide and titanium oxide; borosilicate cores coated with one or more layers made of titanium oxide, silicium oxide and/or tin oxide; and titanium oxide cores coated with one or more layers made of iron oxide, iron oxide-hydroxide, chromium oxide, copper oxide, cerium oxide, aluminum oxide, silicium oxide, bismuth vanadate, nickel titanate, cobalt titanate and/or antimony-doped, fluorine-doped or indium-doped tin oxide; aluminum oxide cores coated with one or more layers made of titanium oxide and/or iron oxide.

Suitable interference coated pigments comprising one or more magnetic materials include without limitation structures consisting of a substrate selected from the group consisting of a core coated with one or more layers, wherein at least one of the core or the one or more layers have magnetic properties. For example, suitable interference coated pigments comprise a core made of a magnetic material such as those described hereabove, said core being coated with one or more layers made of one or more metal oxides, or they have a structure consisting of a core made of synthetic or natural micas, layered silicates (e.g. talc, kaolin and sericite), glasses (e.g. borosilicates), silicium dioxides (SiO₂), aluminum oxides (Al₂O₃), titanium oxides (TiO₂), graphites and mixtures of two or more thereof. Furthermore, one or more additional layers such as coloring layers may be present.

The color constant layer described herein is made of a color constant composition comprising from about 1 to about 20 wt-% of one or more dyes and/or from about 0.1 to about 45 wt-% of inorganic pigments, organic pigments or mixtures thereof, the weight percents being based on the total weight of the color constant composition.

Dyes suitable for inks are known in the art and are preferably selected from the group comprising reactive dyes, direct dyes, anionic dyes, cationic dyes, acid dyes, basic dyes, food dyes, metal-complex dyes, solvent dyes and mixtures thereof. Typical examples of suitable dyes include without limitation coumarines, cyanines, oxazines, uranines, phtalocyanines, indolinocyanines, triphenylmethanes, naphtalocyanines, indonanaphtalo-metal dyes, anthraquinones, anthrapyridones, azo dyes, rhodamines, squarilium dyes, croconium dyes. Typical examples of dyes suitable for the present invention include without limitation C.I. Acid Yellow 1, 3, 5, 7, 11, 17, 19, 23, 25, 29, 36, 38, 40, 42, 44, 49, 54, 59, 61, 70, 72, 73, 75, 76, 78, 79, 98, 99, 110, 111, 121, 127, 131, 135, 142, 157, 162, 164, 165, 194, 204, 236, 245; C.I. Direct Yellow 1, 8, 11, 12, 24, 26, 27, 33, 39, 44, 50, 58, 85, 86, 87, 88, 89, 98, 106, 107, 110, 132, 142, 144; C.I. Basic Yellow 13, 28, 65; C.I. Reactive Yellow 1, 2, 3, 4, 6, 7, 11, 12, 13, 14, 15, 16, 17, 18, 22, 23, 24, 25, 26, 27, 37, 42; C.I. Food Yellow 3, 4; C.I. Acid Orange 1, 3, 7, 10, 20, 76, 142, 144; C.I. Basic Orange 1, 2, 59; C.I. Food Orange 2; C.I. Orange B; C.I. Acid Red 1, 4, 6, 8, 9, 13, 14, 18, 26, 27, 32, 35, 37, 42, 51, 52, 57, 73, 75, 77, 80, 82, 85, 87, 88, 89, 92, 94, 97, 106, 111, 114, 115, 117, 118, 119, 129, 130, 131, 133, 134, 138, 143, 145, 154, 155, 158, 168, 180, 183, 184, 186, 194, 198, 209, 211, 215, 219, 221, 249, 252, 254, 262, 265, 274, 282, 289, 303, 317, 320, 321, 322, 357, 359; C.I. Basic Red 1, 2, 14, 28; C.I. Direct Red 1, 2, 4, 9, 11, 13, 17, 20, 23, 24, 28, 31, 33, 37, 39, 44, 46, 62, 63, 75, 79, 80, 81, 83, 84, 89, 95, 99, 113, 197, 201, 218, 220, 224, 225, 226, 227, 228, 229, 230, 231, 253; C.I. Reactive Red 1, 2, 3, 4, 5, 6, 7, 8, 11, 12, 13, 15, 16, 17, 19, 20, 21, 22, 23, 24, 28, 29, 31, 32, 33, 34, 35, 36, 37, 38, 39, 40, 41, 42, 43, 45, 46, 49, 50, 58, 59, 63, 64, 108, 180; C.I. Food Red 1, 7, 9, 14; C.I. Acid Blue 1, 7, 9, 15, 20, 22, 23, 25, 27, 29, 40, 41, 43, 45, 54, 59, 60, 62, 72, 74, 78, 80, 82, 83, 90, 92, 93, 100, 102, 103, 104, 112, 113, 117, 120, 126, 127, 129, 130, 131, 138, 140, 142, 143, 151, 154, 158, 161, 166, 167, 168, 170, 171, 182, 183, 184, 187, 192, 193, 199, 203, 204, 205, 229, 234, 236, 249, 254, 285; C.I. Basic Blue 1, 3, 5, 7, 8, 9, 11, 55, 81; C.I. Direct Blue 1, 2, 6, 15, 22, 25, 41, 71, 76, 77, 78, 80, 86, 87, 90, 98, 106, 108, 120, 123, 158, 160, 163, 165, 168, 192, 193, 194, 195, 196, 199, 200, 201, 202, 203, 207, 225, 226, 236, 237, 246, 248, 249; C.I. Reactive Blue 1, 2, 3, 4, 5, 7, 8, 9, 13, 14, 15, 17, 18, 19, 20, 21, 25, 26, 27, 28, 29, 31, 32, 33, 34, 37, 38, 39, 40, 41, 43, 44, 46, 77; C.I. Food Blue 1, 2; C.I. Acid Green 1, 3, 5, 16, 26, 104; C.I. Basic Green 1, 4; C.I: Food Green 3; C.I. Acid Violet 9, 17, 90, 102, 121; C.I. Basic Violet 2, 3, 10, 11, 21; C.I. Acid Brown 101, 103, 165, 266, 268, 355, 357, 365, 384; C.I. Basic Brown 1; C.I. Acid Black 1, 2, 7, 24, 26, 29, 31, 48, 50, 51, 52, 58, 60, 62, 63, 64, 67, 72, 76, 77, 94, 107, 108, 109, 110, 112, 115, 118, 119, 121, 122, 131, 132, 139, 140, 155, 156, 157, 158, 159, 191, 194; C.I. Direct Black 17, 19, 22, 32, 39, 51, 56, 62, 71, 74, 77, 94, 105, 106, 107, 108, 112, 113, 117, 118, 132, 133, 146, 154, 168; C.I. Reactive Black 1, 3, 4, 5, 6, 8, 9, 10, 12, 13, 14, 18, 31; C.I. Food Black 2; C.I. Solvent Yellow 19, C.I. Solvent Orange 45, C.I. Solvent Red 8, C.I. Solvent Green 7, C.I. Solvent Blue 7, C.I. Solvent Black 7; C.I. Disperse Yellow 3, C.I. Disperse Red 4, 60, C.I. Disperse Blue 3, and metal azo dyes disclosed in US 5,074,914, US 5,997,622, US 6,001,161, JP 02-080470, JP 62-190272, JP 63-218766. Suitable dyes for the present invention may be infrared absorbing dyes, luminescent dyes.

Typical examples of organic and inorganic pigments suitable for the present invention include without limitation C.I. Pigment Yellow 12, C.I. Pigment Yellow 42, C.I. Pigment Yellow 93, 109, C.I. Pigment Yellow 110, C.I. Pigment Yellow 147, C.I. Pigment Yellow 173, C.I. Pigment Orange 34, C.I. Pigment Orange 48, C.I. Pigment Orange 49 , C.I. Pigment Orange 61, C.I. Pigment Orange 71 C.I. Pigment Orange 73, C.I. Pigment Red 9, C.I. Pigment Red 22, C.I. Pigment Red 23, C.I. Pigment Red 67, C.I. Pigment Red 122, C.I. Pigment Red 144, C.I. Pigment Red 146, C.I. Pigment Red 170, C.I. Pigment Red 177, C.I. Pigment Red 179, C.I. Pigment Red 185, C.I. Pigment Red 202, C.I. Pigment Red 224, C.I. Pigment Red 242, C.I. Pigment Red 254, C.I. Pigment Red 264, C.I. Pigment Brown 23, C.I. Pigment Blue 15, C.I. Pigment Blue 15:3, C.I. Pigment Blue 60, C.I. Pigment Violet 19, C.I. Pigment Violet 23, C.I. Pigment Violet 32, C.I. Pigment Violet 37, C.I. Pigment Green 7, C.I. Pigment Green 36, C.I. Pigment Black 7, C.I. Pigment Black 11, metal oxides such as titanium dioxide, antimony yellow, lead chromate, lead chromate sulfate, lead molybdate, ultramarine blue, cobalt blue, manganese blue, chrome oxide green, hydrated chrome oxide green, cobalt green and metal sulfides, such as cerium or cadmium sulfide, cadmium sulfoselenides, zinc ferrite, bismuth vanadate, Prussian blue, Fe₃O₄, carbon black ,mixed metal oxides, azo, azomethine, methine, anthraquinone, phthalocyanine, perinone, perylene, diketopyrrolopyrrole, thioindigo, thiazinindigo, dioxazine, iminoisoindoline, iminoisoindolinone, quinacridone, flavanthrone, indanthrone, anthrapyrimidine and quinophthalone pigments.

The security thread or stripe described herein comprises an optically variable layer made of an optically variable composition and a color constant layer made of a color constant composition, said compositions are preferably independently selected from the group consisting of radiation curable compositions, thermal drying compositions and combination thereof.

According to one aspect of the present invention, the optically variable composition and/or the color constant composition described herein consist of thermal drying coating compositions. Thermal drying coating compositions consist of coating compositions of any type of aqueous compositions or solvent-based compositions which are dried by hot air, infrared or by a combination of hot air and infrared. Typical examples of thermal drying coating compositions comprises components including without limitation resins such as polyester resins, polyether resins, vinyl chloride polymers and vinyl chloride based copolymers, nitrocellulose resins, cellulose acetobutyrate or acetopropionate resins, maleic resins, polyamides, polyolefins, polyurethane resins, functionalized polyurethane resins (e.g. carboxylated polyurethane resins), polyurethane alkyd resins, polyurethane-(meth)acrylate resins, urethane-(meth)acrylic resins, styrene (meth)acrylate resins or mixtures thereof. The term "(meth)acrylate" or "(meth)acrylic" in the context of the present invention refers to the acrylate as well as the corresponding methacrylate or refers to the acrylic as well as the corresponding methacrylic. As used herein, the term "solvent-based compositions" refers to compositions whose liquid medium or carrier substantially consists of one or more organic solvents. Examples of such solvents include without limitation alcohols (such as for example methanol, ethanol, isopropanol, n-propanol, ethoxy propanol, n-butanol, sec-butanol, tert-butanol, iso-butanol, 2-ethylhexyl-alcohol and mixtures thereof); polyols (such as for example glycerol, 1,5-pentanediol, 1,2,6-hexanetriol and mixtures thereof); esters (such as for example ethyl acetate, n-propyl acetate, n-butyl acetate and mixtures thereof); carbonates (such as for example dimethyl carbonate, diethylcarbonate, di-n-butylcarbonate, 1,2-ethylencarbonate, 1,2-propylenecarbonate, 1,3-propylencarbonate and mixtures thereof); aromatic solvents (such as for example toluene, xylene and mixtures thereof); ketones and ketone alcohols (such as for example acetone, methyl ethyl ketone, methyl isobutyl ketone, cyclohexanone, diacetone alcohol and mixtures thereof); amides (such as for example dimethylformamide, dimethyl-acetamide and mixtures thereof); aliphatic or cycloaliphatic hydrocarbons; chlorinated hydrocarbons (such as for example dichloromethane); nitrogen-containing heterocyclic compound (such as for example N-methyl-2-pyrrolidone, 1,3-dimethyl-2-imidazolidone and mixtures thereof); ethers (such as for example diethyl ether, tetrahydrofuran, dioxane and mixtures thereof); alkyl ethers of a polyhydric alcohol (such as for example 2-methoxyethanol, 1-methoxypropan-2-ol and mixtures thereof); alkylene glycols, alkylene thioglycols, polyalkylene glycols or polyalkylene thioglycols (such for example ethylene glycol, polyethylene glycol (such as for example diethylene glycol, triethylene glycol, tetraethylene glycol), propylene glycol, polypropylene glycol (such as for example dipropylene glycol, tripropylene glycol), butylene glycol, thiodiglycol, hexylene glycol and mixtures thereof); nitriles (such as for example acetonitrile, propionitrile and mixtures thereof), and sulfur-containing compounds (such as for example dimethylsulfoxide, sulfolan and mixtures thereof). Preferably, the one or more organic solvents are selected from the group consisting of alcohols, esters and mixtures thereof.

According to another aspect of the present invention, the optically variable composition and/or the color constant composition described herein consist of radiation curable coating compositions. Radiation curable coating compositions include compositions that may be cured UV-visible light radiation (hereafter referred as UV-Vis-curable) or by E-beam radiation (hereafter referred as EB). Radiation curable coating compositions are known in the art and can be found in standard textbooks such as the series "Chemistry & Technology of UV & EB Formulation for Coatings, Inks & Paints", published in 7 volumes in 1997-1998 by John Wiley & Sons in association with SITA Technology Limited. Preferably, the coating compositions described herein consist of UV-Vis-curable coating compositions. Preferably the UV-Vis-curable coating compositions described herein are prepared from oligomers (also referred in the art as prepolymers) selected from the group consisting of radically curable compounds, cationically curable compounds and mixtures thereof. Cationically curable compounds are cured by cationic mechanisms consisting of the activation by energy of one or more photoinitiators which liberate cationic species, such as acids, which in turn initiate the polymerization so as to form the binder. Radically curable compounds are cured by free radical mechanisms consisting of the activation by energy of one or more photoinitiators which liberate free radicals which in turn initiate the polymerization so as to form the binder. UV-Vis curing of a monomer, oligomer or prepolymer may require the presence of one or more photoinitiators and may be performed in a number of ways. As known by those skilled in the art, the one or more photoinitiators are selected according to their absorption spectra and are selected to fit with the emission spectra of the radiation source. Depending on the monomers, oligomers or prepolymers used in the UV-Vis-curable coating compositions described herein, different photoinitiators might be used. Suitable examples of free radical photoinitiators are known to those skilled in the art and include without limitation acetophenones, benzophenones, alpha-aminoketones, alpha-hydroxyketones, phosphine oxides and phosphine oxide derivatives and benzyldimethyl ketals. Suitable examples of cationic photoinitiators are known to those skilled in the art and include without limitation onium salts such as organic iodonium salts (e.g. diaryl iodoinium salts), oxonium (e.g. triaryloxonium salts) and sulfonium salts (e.g. triarylsulphonium salts). Other examples of useful photoinitiators can be found in standard textbooks such as "Chemistry & Technology of UV & EB Formulation for Coatings, Inks & Paints", Volume III, "Photoinitiators for Free Radical Cationic and Anionic Polymerization", 2nd edition, by J. V. Crivello & K. Dietliker, edited by G. Bradley and published in 1998 by John Wiley & Sons in association with SITA Technology Limited. It may also be advantageous to include a sensitizer in conjunction with the one or more photoinitiators in order to achieve efficient curing. Typical examples of suitable photosensitizers include without limitation isopropyl-thioxanthone (ITX), 1-chloro-2-propoxy-thioxanthone (CPTX), 2-chloro-thioxanthone (CTX) and 2,4-diethyl-thioxanthone (DETX) and mixtures thereof. The one or more photoinitiators comprised in the UV-Vis-curable coating compositions are preferably present in an amount from about 0.1 wt-% to about 20 wt-%, more preferably about 1 wt-% to about 15 wt-%, the weight percents being based on the total weight of the UV-Vis-curable coating compositions.

Alternatively, dual-cure coating compositions may be used; these coating compositions combine thermal drying and radiation curing mechanisms. Typically, such compositions are similar to radiation curing compositions but include a volatile part constituted by water and/or by solvent. These volatile constituents are evaporated first using hot air and/or IR driers, and UV-Vis drying is then completing the hardening process.

The optically variable composition and/or the color constant composition described herein may further comprise one or more machine readable materials. When present, the one or more machine readable materials are preferably independently selected from the group consisting of magnetic materials, luminescent materials, electrically conductive materials, infrared-absorbing materials and mixtures thereof. As used herein, the term "machine readable material" refers to a material which exhibits at least one distinctive property which is detectable by a device or a machine, and which can be comprised in a coating or layer so as to confer a way to authenticate said coating or article comprising said coating by the use of a particular equipment for its detection and/or authentication.

The optically variable composition and/or the color constant composition described herein may independently further comprise one or more additives including without limitation compounds and materials which are used for adjusting physical, rheological and chemical parameters of the composition such as the viscosity (e.g. solvents and surfactants), the consistency (e.g. anti-settling agents, fillers and plasticizers), the foaming properties (e.g. antifoaming agents), the lubricating properties (waxes), UV stability (photosensitizers and photostabilizers) and adhesion properties, *etc.* Additives described herein may be present in the coating compositions described herein in amounts and in forms known in the art, including in the form of so-called nano-materials where at least one of the dimensions of the particles is in the range of 1 to 1000 nm.

The optically variable composition and the color constant composition described herein may be independently prepared by dispersing or mixing the optically variable pigments described herein, the one or more dyes described therein and/or the inorganic pigments, organic pigments or mixtures thereof described herein as the case may be, and the one or more additives when present in the presence of the binder described herein, thus forming liquid compositions. When present, the one or more photoinitiators may be added to the composition either during the dispersing or mixing step of all other ingredients or may be added at a later stage, i.e. after the formation of the liquid composition.

The security thread or stripe described herein comprises an holographic metallic layer. Holographic metallic layers are well known in the field of the protection of security documents or articles against counterfeiting and/or illegal reproduction. The holographic metallic layer consists of a metallic relief pattern present in an embossing lacquer layer. The relief pattern provides a hologram or other surface relief-based structure. The relief pattern can take various forms including diffraction gratings, holographic patterns such as two-dimensional and three-dimensional holographic images, corner cube reflectors, zero order diffraction patterns, moiré patterns, or other light interference patterns, including those based on microstructures having dimensions in the range from about 0.1 µm to about 10 µm and various combinations of the above such as hologram/grating images, or other interference patterns. The relief pattern is made of a reflective metal including without limitation aluminum, silver, nickel, silver-palladium, silver-copper alloy, copper, gold, and the like. The holographic metallic layer described herein may comprise one or more demetalized parts in the form of indicia in negative writing (also referred in the art as clear text) or positive writing as mentioned hereafter for metalized substrates.

Methods for producing holographic metallic layers are well known by those skilled in the art. For example, a surface of layer may be embossed by well known methods, such as by pressing it in contact with a heated nickel embossing shim at high pressure. Other methods include photolithography and molding of a plastic substrate against a patterned surface. Holographic metallic layers can be produced from a thermoplastic film that has been embossed by heat softening the surface of the film and then passing the film through embossing rollers that impart the diffraction grating or holographic image onto the softened surface. In this way, sheets of effectively unlimited length can be formed with the diffraction grating or holographic image thereon. Alternatively, holographic metallic layers can be made by passing a roll of plastic film coated with an ultraviolet (UV) curable polymer, such as PMMA, through a set of UV transparent rollers whereby the rollers set a pattern into the UV curable polymer and the polymer is cured by a UV light that passes through the UV transparent rollers. One the associated surface relief structure is prepared, the reflective metal described herein is deposited in a desired pattern.

The security thread or stripe described herein comprises a substrate. Preferably, the substrate is selected from the group consisting of plastics, polymers, composite materials, metals, metalized materials and mixtures thereof. Preferably, the substrate is made of one or more plastics or polymers selected form the group consisting of polyolefins (e.g. polyethylene and polypropylene), polyamides, polyesters (e.g. polyethylene terephthalate) (PET), poly(1,4-butylene terephthalate) (PBT) and polyethylene 2,6-naphthoate) (PEN)), polyvinylchlorides (PVC) and mixtures thereof. Typical examples of composite materials include without limitation multilayer structures or laminates of paper and at least one plastic or polymer material such as those described hereabove. Typical example of metals include without limitation aluminum (Al), chromium (Cr), copper (Cu), gold (Au), iron (Fe), nickel (Ni) , silver (Ag), combinations thereof or alloys of two or more of the aforementioned metals. Typical examples of metalized materials include without limitation plastic or polymer materials having a metal such as those described hereabove disposed either continuously or discontinuously on their surface. The metallization of the material described hereabove may be done by an electrodeposition process, a high-vacuum coating process or by a sputtering process and may be continuous or discontinuous. Typically, the metal has a thickness between about 1 and about 100 nanometers (nm). Alternatively, the substrate may be a laminated structure consisting of two layers laminated together and optionally comprising a security element and/or metallization between the two layers. The metalized materials described herein may comprise demetalized parts in the form of indicia in negative writing (also referred in the art as clear text) or positive writing. By "positive writing", it is meant that the indicia consist of a metal surrounded by a demetalized area and by "negative writing"; it is meant that the indicia consist of negative text, i.e. a metal material comprising demetalized parts in the form of indicia in negative writing. The demetalized parts may be produced by processes known to those skilled in the art such as for example chemical etching, laser etching or washing methods. The substrate described herein may be colored.

The security thread or stripe described herein may further comprise an additional transparent substrate, said substrate facing the environment, i.e. said substrate facing outwardly, so that the optically variable layer, the color constant layer and the holographic metallic layer are comprised between the two substrates in the security thread or stripe and are at least partially jointly visible from the side of the security thread or stripe comprising the optically variable layer and/or the color constant layer. The substrate described herein and the optional transparent substrate described herein may be different or may be the same. Preferably, the substrate described herein and the optional transparent substrate described herein are independently made of one or more plastics or polymers independently selected from the group consisting of the plastics or polymers described hereabove.

When the security thread or stripe described herein only comprise the substrate described herein (i.e. no additional transparent substrate described hereabove), and with the aim of increasing the wear and soil resistance or with the aim of modifying the optical gloss or aesthetic appearance of the security thread or stripe described herein, the security thread or stripe described herein may further comprise one or more protective layers present on the opposite side of the substrate. When present, the one or more protective layers may be continuous or discontinuous. When present, the one or more protective layers are typically made of protective varnishes which are transparent or slightly colored or tinted so that the optically variable layer, the color constant layer and the holographic metallic layer are at least partially jointly visible from the side of the security thread or stripe comprising the optically variable layer and/or the color constant layer. The one or more protective varnish may be more or less glossy. Protective varnishes may be radiation curable compositions, thermal drying compositions or any combination thereof such as those described hereabove. Preferably, the one or more protective layers are made of radiation curable, more preferably UV-Vis curable, compositions.

The security thread or stripe described herein may further comprise one or more additional layers preferably selected from the group consisting of adhesive layers, lacquers, machine readable layers, hiding layers and combinations thereof, provided that the optically variable layer, the color constant layer and the holographic metallic layer are at least partially jointly visible from the side of the security thread or stripe comprising the optically variable layer and/or the color constant layer. When present, the one or more additional layers may be continuous or discontinuous. The one or more additional layers described herein may be placed on one side, on both sides of the substrate described herein or between the layers described herein.

The security thread or stripe described herein may further comprise one or more adhesive layers, preferably one or more thermoadhesive layers, on at least one surface of said security thread or stripe so as to provide adherence to a security document upon incorporation of the security thread or stripe into or onto said security document.

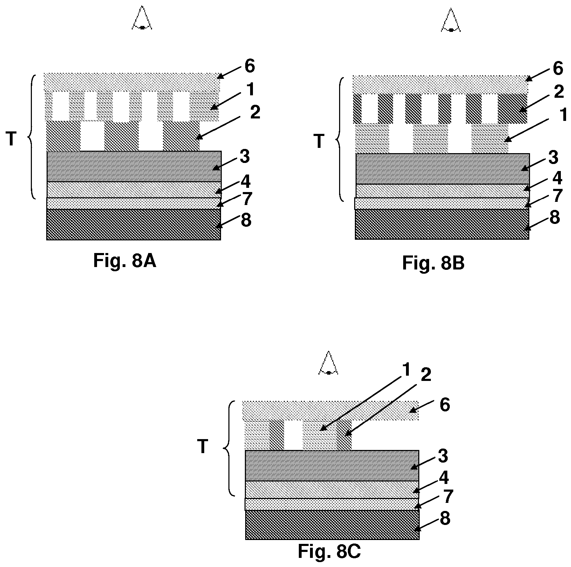

With the aim of facilitating an automatic authenticity check of the security thread or stripe described herein or a security document comprising said security thread or stripe by an authentication apparatus such as for example an automatic teller machine (ATMs), the security thread or stripe described herein may further comprise one or more machine readable layers, provided that the optically variable layer, the color constant layer and the holographic metallic layer are at least partially jointly visible from the side of the security thread or stripe comprising the optically variable layer and/or the color constant layer. Said one or more machine readable layers may be continuous or discontinuous. When present, the one or more machine readable layers preferably comprise a machine readable material selected from the group consisting of magnetic materials, luminescent materials, electrically conductive materials, infrared-absorbing materials and mixtures thereof. According to one embodiment, the security thread or stripe described herein comprises one or more machine readable layers described herein, wherein said one or more machine readable layers are present on the side of the substrate described herein facing the environment, i.e. on the opposite side of the holographic metallic layer (see Figures 8A-C).

With the aim of further increasing the resistance against counterfeiting or illegal reproduction of the security thread or stripe described herein, it might be advantageous to apply one or more hiding layers so as to camouflage any information that is present in the security thread or stripe such as for example any information related to the one or more machine readable layers described hereabove. For example, magnetic or other machine readable information which is visually discernible could be more easily counterfeited if the potential counterfeiter can detect the presence and/or the placement of the magnetic regions to read. If the magnetic or other machine readable information cannot be visually seen, the counterfeiter will not be motivated to reproduce this information and therefore the counterfeiting will fail and be easily detected if illegally reproduced. Typical examples of hiding layers include without limitation aluminum layers, black layers, white layers, opaque colored layers and metalized layers and combination of thereof. As mentioned hereabove for the one or more machine readable layers, the one or more hiding layers may be may be continuous or discontinuous and are preferably apply on the one or more machine readable layers provided that the optically variable layer, the color constant layer and the holographic metallic layer are at least partially jointly visible from the side of the security thread or stripe comprising the optically variable layer and/or the color constant layer.

A processes for producing the security threads or stripes described herein but not according to the present invention comprises the steps of:
a. providing the substrate described herein and comprising the holographic metallic layer described herein,
b. either b1) applying the color constant composition described herein onto the holographic metallic layer so as to form the color constant layer described herein by a process selected from the group consisting of offset, rotogravure, screen printing, flexography and combinations thereof either while keeping one or more gaps in the form of indicia or by applying the color constant composition in the form of indicia and hardening said color constant composition; and applying the optically variable composition described herein so as to form the optically variable layer described herein by a process selected from the group consisting of rotogravure, screen printing flexography and combinations thereof either while keeping one or more gaps in the form of indicia or by applying the optically variable composition in the form of indicia and hardening said optically variable composition,
   or b2) applying the optically variable composition described herein onto the holographic metallic layer so as to form the optically variable layer described herein by a process selected from the group consisting of rotogravure, screen printing, flexography and combinations thereof either while keeping one or more gaps in the form of indicia or by applying the optically variable composition in the form of indicia, and hardening said optically variable composition; and applying the color constant composition described herein so as to form the color constant layer described herein by a process selected from the group consisting of offset, rotogravure, screen printing, flexography and combinations thereof either while keeping one or more gaps in the form of indicia or by applying the color constant composition in the form of indicia
c) optionally applying a transparent substrate on the structure obtained under step b), and
d) optionally applying one or more adhesive layers on one or both sides of the structure obtained under step b) or c).

When the security thread or stripe described herein comprises the optically variable layer facing the environment and the color constant layer facing the holographic metallic layer and the optically variable layer (i.e. when the optically variable layer is disposed on top of color constant layer) and as depicted in Figure 1, the process described herein is carried out with step b1), i.e. the color constant composition is first applied as described herein onto the holographic metallic layer so as to form the color constant layer described and hardened and, subsequently, the optically variable composition is applied as described herein so as to form the optically variable layer and hardened.

When the security thread or stripe described herein comprises the color constant layer facing the environment and the optically variable layer facing the holographic metallic layer and the color constant layer (i.e. when the color constant is disposed on top of optically variable layer) and as depicted in Figure 2, the process described herein is carried out with step b2), i.e. the optically variable composition is first applied onto the holographic metallic layer so as to form the optically variable layer described and hardened and, subsequently, the color constant composition is applied as described herein so as to form the color constant layer described herein and hardened.

When the security thread or stripe described herein comprises the optically variable layer being adjacent to the color constant layer and both layers facing the holographic metallic layer (i.e. when the optically variable layer is adjacent to the color constant layer and when the optically variable layer and the color constant layer are both disposed on top of the holographic metallic layer) and as depicted in Figures 3A-B, the process described herein is carried out with step b1) or b2).

As mentioned hereabove, the optically variable composition and the color constant composition are applied by a printing process so as to form an optically variable layer and a color constant layer respectively. Using printing processes for producing the security threads or stripes described herein provides a high flexibility in terms of designs and color combinations.

The rotogravure, screen printing and flexography described herein are well-known to the skilled man and are described for example in Printing Technology, J. M. Adams and P. A. Dolin, Delmar Thomson Learning, 5th Edition.

As known by those skilled in the art, the term rotogravure refers to a printing process which is described for example in "Handbook of print media", Helmut Kipphan, Springer Edition, pages 360-394. Rotogravure is a printing process wherein the image or pattern elements are engraved into the surface of the gravure cylinder. The printing assembly further comprises an impression roller. The term rotogravure does not encompass intaglio printing processes (also referred in the art as engraved steel die or copper plate printing processes) which rely for example on a different type of ink or composition. The non-image areas are at a constant original level. Prior to printing, the entire printing plate (non-printing and printing elements) is inked and flooded with ink or composition. The image or pattern consists of cells (or wells) engraved into the gravure cylinder. The excess of ink or composition in the non-image area is removed by a wiper or a blade before printing, so that ink or composition remains only in the recessed cells. The image or pattern is transferred from the recessed cells to the substrate by a combination of pressure typically in the range of 1 to 4 bars, capillarity and by the adhesive forces between the substrate and the ink or composition. The term rotogravure does not encompass intaglio printing processes (also referred in the art as engraved steel die or copper plate printing processes) which rely for example on a different type of ink or composition. Screen printing (also referred in the art as silkscreen printing) is a stencil process whereby a composition is transferred to a surface through a stencil supported by a fine fabric mesh of silk, synthetic fibers or metal threads stretched tightly on a frame. The pores of the mesh are blocked-up in the non-image areas and left open in the image area, the image carrier being called the screen. During printing, the frame is supplied with the composition which is flooded over the screen and a urging means such as for example a squeegee is then drawn across it, thus forcing the composition through the open pores of the screen. At the same time, the surface to be printed is held in contact with the screen and the ink or composition is transferred to it. Preferably a rotary screen cylinder is used. Screen printing is further described for example in The Printing ink manual, R.H. Leach and R.J. Pierce, Springer Edition, 5th Edition, pages 58-62 and in Printing Technology, J. M. Adams and P.A. Dolin, Delmar Thomson Learning, 5th Edition, pages 293-328. Flexography preferably uses a unit with a doctor blade, preferably a chambered doctor blade, an anilox roller and plate cylinder. The anilox roller advantageously has small cells whose volume and/or density determines the composition application rate. The doctor blade lies against the anilox roller, and scraps off surplus composition at the same time. The anilox roller transfers the composition to the plate cylinder which finally transfers the composition to the substrate. Specific design might be achieved using a designed photopolymer plate. Plate cylinders can be made from polymeric or elastomeric materials. Polymers are mainly used as photopolymer in plates and sometimes as a seamless coating on a sleeve. Photopolymer plates are made from light-sensitive polymers that are hardened by ultraviolet (UV) light. Photopolymer plates are cut to the required size and placed in an UV light exposure unit. One side of the plate is completely exposed to UV light to harden or cure the base of the plate. The plate is then turned over, a negative of the job is mounted over the uncured side and the plate is further exposed to UV light. This hardens the plate in the image areas. The plate is then processed to remove the unhardened photopolymer from the nonimage areas, which lowers the plate surface in these nonimage areas. After processing, the plate is dried and given a post-exposure dose of UV light to cure the whole plate. Preparation of plate cylinders for flexography is described in Printing Technology, J. M. Adams and P.A. Dolin, Delmar Thomson Learning, 5th Edition, pages 359-360.

Subsequently to the application by the printing process described herein of the color constant composition, said composition is hardened. The same applies for the optically variable composition. The hardening steps described herein may be any step that increases the viscosity of the composition such that a substantially solid material adhering to the substrate is formed. The hardening steps described herein may independently involve a physical process based on the evaporation of a volatile component, such as a solvent, and/or water evaporation (i.e. physical drying). Herein, hot air, infrared or a combination of hot air and infrared may be used. Alternatively, the hardening steps described herein may independently include a chemical reaction which is not reversed by a simple temperature increase that may occur during a typical use of the security thread described, such as a curing, polymerizing or cross-linking of the binder and optional initiator compounds and/or optional cross-linking compounds comprised in the composition. Such a chemical reaction may be initiated by heat or IR irradiation as outlined above for the physical hardening processes, but may preferably include the initiation of a chemical reaction by a radiation mechanism including without limitation Ultraviolet-Visible light radiation curing (hereafter referred as UV-Vis curing) and electronic beam radiation curing (E-beam curing); oxypolymerization (oxidative reticulation, typically induced by a joint action of oxygen and one or more catalysts preferably selected from the group consisting of cobalt-containing catalysts, vanadium-containing catalysts, zirconium-containing catalysts, bismuth-containing catalysts, and manganese-containing catalysts); cross-linking reactions or any combination thereof.

When the optically variable composition comprises optically variable pigments selected from the group consisting of magnetic thin film interference pigments, interference coated pigment particles comprising a magnetic material and mixtures thereof, preferably magnetic thin film interference pigments, said optically variable pigment may be oriented in the optically variable layer of the security thread described herein, i.e. not randomly distributed and aligned. By comprising the magnetic thin film interference pigments, interference coated pigment particles comprising a magnetic material or mixtures thereof described herein, the optically variable composition described herein is well-suited for producing security threads exhibiting dynamic, three-dimensional, illusionary, and/or kinematic images by aligning the pigment within the optically variable composition with a magnetic field. A large variety of optical effects can be produced by various methods disclosed for example in US 6,759,097, EP 2 165 774 A1 and EP 1 878 773 B1. Optical effects known as flip-flop effects (also referred in the art as switching effect) may be produced. Flip-flop effects include a first printed portion and a second printed portion separated by a transition, wherein pigment particles are aligned parallel to a first plane in the first portion and pigment particles in the second portion are aligned parallel to a second plane. Methods for producing flip-flop effects are disclosed for example in EP 1 819 525 B1 and EP 1 819 525 B1. Optical effects known as rolling-bar effects may also be produced. Rolling-bar effects show one or more contrasting bands which appear to move ("roll") as the image is tilted with respect to the viewing angle, said optical effects are based on a specific orientation of magnetic or magnetizable pigment particles, said pigment particles being aligned in a curving fashion, either following a convex curvature (also referred in the art as negative curved orientation) or a concave curvature (also referred in the art as positive curved orientation. Methods for producing rolling-bar effects are disclosed for example in EP 2 263 806 A1, EP 1 674 282 B1, EP 2 263 807 A1, WO 2004/007095 A2 and WO 2012/104098 A1. Optical effects known as Venetian-blind effects may also be produced. Venetian-blind effects include pigment particles being oriented such that, along a specific direction of observation, they give visibility to an underlying substrate surface, such that indicia or other features present on or in the substrate surface become apparent to the observer while they impede the visibility along another direction of observation. Methods for producing Venetian-blind effects are disclosed for example in US 8,025,952 and EP 1 819 525 B1. Optical effects known as moving-ring effects may also be produced. Moving-ring effects consists of optically illusive images of objects such as funnels, cones, bowls, circles, ellipses, and hemispheres that appear to move in any x-y direction depending upon the angle of tilt of said optical effect layer. Methods for producing moving-ring effects are disclosed for example in EP 1 710 756 A1, US 8,343,615, EP 2 306 222 A1, EP 2 325 677 A2, WO 2011/092502 A2 and US 2013/084411

While the optically variable composition comprising the optically variable pigments selected from the group consisting of magnetic thin film interference pigments interference coated pigment particles comprising a magnetic material and mixtures thereof is still wet or soft enough so that the particles therein can be moved and rotated (i.e. while the optically variable composition is in a first state), the optically variable composition may be subjected to a magnetic orientation step, i.e. the optically variable composition may be subjected to a magnetic field to achieve orientation of the particles. The step of magnetically orienting the particles comprises a step of exposing the applied optically variable composition, while it is "wet" (i.e. still liquid and not too viscous, that is, in a first state), to a determined magnetic field generated by the magnetic-field-generating device, thereby orienting the particles along the field lines of the magnetic field such as to form an orientation pattern.

The step of exposing the optically variable composition comprising the optically variable pigments selected from the group consisting of magnetic thin film interference pigments interference coated pigment particles comprising a magnetic material and mixtures thereof to a magnetic field can be performed either partially simultaneously or simultaneously with the step of applying the optically variable composition or subsequently to said step. That is, both steps may be performed partially simultaneously or simultaneously or subsequently.

The process for producing the security thread or stripe described herein comprising the optically variable composition comprising the optically variable pigments selected from the group consisting of magnetic thin film interference pigments, interference coated pigment particles comprising a magnetic material and mixtures thereof, comprises, partially simultaneously with the magnetic orienting step or subsequently to the magnetic orienting step, a step of hardening such as described hereabove the optically variable composition so as to fix the particles in their adopted positions and orientations in a desired pattern, thereby transforming the optically variable composition to a second state. By this fixing, a solid optically variable layer is formed.

When the optically variable composition comprising the optically variable pigments selected from the group consisting of magnetic thin film interference pigments, interference coated pigment particles comprising a magnetic material and mixtures thereof is subjected to an orientation step so as to orient the pigments described herein, it is particularly preferred to harden said optically variable composition by radiation curing and more preferably by UV-Vis light radiation curing, since these technologies advantageously lead to very fast curing processes and hence drastically decrease the preparation time of the security thread described herein. Moreover, radiation curing has the advantage of producing an almost instantaneous increase in viscosity of the optically variable composition after exposure to the curing radiation, thus minimizing any further movement of the particles. In consequence, any loss of information after the magnetic orientation step can essentially be avoided.

The process for producing the security thread or stripe described herein may further comprise a step of applying, preferably by a printing process, one or more protective layers on the opposite side of the substrate, said step being carried out after step b).

The process for producing the security thread or stripe described herein may further comprise a step of applying a transparent substrate on the structure obtained under step b) described herein, said transparent substrate facing the environment and facing the optically variable layer described herein and/or the color constant layer described herein so that the optically variable layer, the color constant layer and the holographic metallic layer are comprised between the two substrates in the security thread or stripe and are at least partially jointly visible from the side of the security thread or stripe comprising the optically variable layer and/or the color constant layer. The additional transparent substrate described herein may be different from or may be the same as the substrate described hereabove. Preferably, the additional transparent substrate described herein is made of one or more plastics or polymers. Preferably, the additional transparent substrate is made of one or more plastics or polymers selected form the group consisting of polyolefins (e.g. polyethylene and polypropylene), polyamides, polyesters (e.g. polyethylene terephthalate) (PET), poly(1,4-butylene terephthalate) (PBT) and polyethylene 2,6-naphthoate) (PEN)), polyvinylchlorides (PVC) and mixtures thereof.

The process for producing the security thread or stripe described herein invention may further comprise a step of applying one or more adhesive layers, preferably one or more thermoadhesive layers, on one or both sides of the structure obtained under step b) or c) described herein. Applying one or more adhesive layers, preferably one or more thermoadhesive layers, on one or both sides of the structure obtained under step b) or c) described herein provides adherence to a security document upon incorporation of the thread or stripe into or onto said security document.

Alternatively, security threads or stripes described herein comprising an additional transparent substrate such as those described hereabove may be prepared by laminating a) a first structure comprising the substrate described herein and the holographic metallic layer described herein with b) a second structure comprising the additional transparent substrate described herein, the optically variable layer and the color constant layer, the optically variable layer and the color constant layer being prepared as described hereabove. Lamination may be performed by a conventional lamination process known in the art such as for example a processes consisting of applying heat and/or pressure on the first and second structures optionally further comprising an additional material present at least one of the surface to be bonded. Typically, the additional material consists of a conventional lamination adhesive layer or a conventional tie layer which may be water-based, solvent-based, solvent-free or UV-curable compositions. In an embodiment, the process comprises a step of applying one or more adhesive layers on the first structure and/or on the second structure to adhere the first and second structures together in the laminated structure.

A further step consisting of slicing the security threads or stripes described herein may be achieved so as to provide security threads or stripes having preferably a width, i.e. dimension in the transverse direction, between about 0.5 mm and about 30 mm, more preferably between about 0.5 mm and about 5 mm. When a step of applying one or more adhesive layers, preferably one or more thermoadhesive layers, on one or both sides of the structure obtained under step b) or d) described herein is performed, the step of slicing the structure is carried out subsequently to the applying one or more adhesive layers step.

The security threads or stripes described herein are particularly suitable for the protection of a security document against counterfeiting, fraud or illegal reproduction. Also described herein are security documents comprising said security threads or stripes. As shown in Figures 8A-C, the optically variable layer (1) and/or the color constant layer (2) or the optional transparent substrate (6), as the case may be, faces the environment and the substrate (4) faces the security document (8), while the optically variable layer (1), the color constant layer (2) and the holographic metallic layer (3) are at least partially jointly visible from the side of the security thread or stripe comprising the optically variable layer and/or the color constant layer (see eye in Figures 8A-C). One or more adhesive layers are preferably present between the optically variable layer (1) and/or the color constant layer (2) and the optional transparent substrate (6) (not shown in Figures 8A-C). The security thread or stripe described herein (T) is at least partially embedded in the security document (8) or the security thread or stripe described herein (T) is mounted on the surface of the security document (8). As shown in Figures 8A-C, optionally one or more machine readable layers (7) described herein may be present in the security thread or stripe (T) described herein. Preferably, said one or more machine readable layers (7) described herein are present on the side of the substrate (4) described herein facing the environment, i.e. on the opposite side of the holographic metallic layer (3). When one or more machine readable layers are present in the security thread or stripe described herein, optionally one or more hiding layers may be present so as to camouflage any information related to the one or more machine readable layers.

Security documents are usually protected by several security features which are chosen from different technology fields, manufactured by different suppliers, and embodied in different constituting parts of the security document. To break the protection of the security document, the counterfeiter would need to obtain all of the implied materials and to get access to all of the required processing technology, which is a hardly achievable task. Examples of security documents include without limitation value documents and value commercial goods. Typical example of value documents include without limitation banknotes, deeds, tickets, checks, vouchers, fiscal stamps and tax labels, agreements and the like, identity documents such as passports, identity cards, visas, bank cards, credit cards, transactions cards, access documents, entrance tickets and the like. The term "value commercial good" refers to packaging material, in particular for pharmaceutical, cosmetics, electronics or food industry that may comprise one or more security features in order to warrant the content of the packaging like for instance genuine drugs. Example of these packaging material include without limitation labels such as authentication brand labels, tamper evidence labels and seals. Preferably, the security document described herein is selected from the group consisting of banknotes, identity documents such as passports, identity cards, driving licenses and the like and more preferably banknotes.

With the aim of increasing the wear and soil resistance or with the aim of modifying the optical gloss or aesthetic appearance of the security document described herein, the security document described herein may further comprise one or more protective layers.

Also described herein are processes for producing a security document comprising the security thread or stripe described herein and security documents obtained thereof. The processes for producing a security document comprising the security thread or stripe described herein comprising the steps of a) producing the security thread or stripe described herein, preferably by the process described herein and b) at least partially embedding in said security document the security thread or stripe obtained under step a) or mounting the security thread or stripe obtained under step a) on the surface of the security document.

As mentioned hereabove, the security thread or stripe described herein may be at least partially embedded into the security document as a windowed security thread or stripe so that said security thread or stripe is at least partially visible from one side of the security document. When the security document comprises a substrate being a security paper, the security thread or stripe described herein may be at least partially embedded incorporated in the security paper during manufacture by techniques commonly employed in the papermaking industry. For example, the security thread or stripe described herein may be pressed within wet paper fibers while the fibers are unconsolidated and pliable, thus resulting in the security thread or stripe being totally embedded in the resulting security paper. The security thread or stripe described herein may also be fed into a cylinder mold papermaking machine, cylinder vat machine, or similar machine of known type, resulting in partial embedment of the security thread or stripe within the body of the finished paper (i.e. windowed paper).

Alternatively, the security thread or stripe described herein may be disposed completely on the surface of the security document as a transfer element. In such as case, the security thread or stripe described herein may be mounted on the surface of the security document by any known techniques including without limitation applying a pressure-sensitive adhesive to a surface of the security thread or stripe, applying a heat activated adhesive to a surface of the security thread or stripe or using thermal transfer techniques.

## Claims

1. A security thread or stripe (T) comprising:
a) an optically variable layer (1) imparting a different color impression at different viewing angles and being made of an optically variable composition comprising from about 2 to about 40 wt-% of optically variable pigments, said optically variable layer (1) comprising one or more gaps in the form of indicia (I, G) or consist of indicia made of the optically variable composition, the weight percents being based on the total weight of the optically variable composition;
b) a color constant layer (2) having a color matching the color impression of the optically variable layer (1) at a viewing angle, and being made of color constant composition comprising from about 1 to about 20 wt-% of one or more dyes and/or from about 0.1 to about 45 wt-% of inorganic pigments, organic pigments or mixtures thereof, said color constant layer (2) either comprising one or more gaps in the form of indicia (I, G) or consist of indicia (I, G) made of the color constant composition, the weight percents being based on the total weight of the color constant composition;
c) a holographic metallic layer (3); and
d) a substrate (4),
wherein
i) the holographic metallic layer (3) is disposed on top of the substrate (4), and
ii) the color constant layer (2) is disposed on top of the holographic metallic layer (3) and the optically variable layer (1) is disposed on top of the color constant layer (2),
or the optically variable layer (1) is disposed on top of the holographic metallic layer (3) and the color constant layer (2) is disposed on top of the optically variable layer (1),
or the optically variable layer (1) is adjacent to the color constant layer (2) and the optically variable layer (1) and the color constant layer (2) are both disposed on top of the holographic metallic layer (3), and wherein further the optically variable layer (1), the color constant layer (2) and the holographic metallic layer (3) are at least partially jointly visible from the side of the security thread or stripe (T) comprising the optically variable layer (1) and/or the color constant layer (2).

2. The security thread or stripe (T) according to claim 1, wherein the substrate (4) is made of one or more plastics or polymers, preferably selected from the group consisting of polyolefins, polyamides, polyesters, polyvinylchlorides and mixtures thereof.

3. The security thread or stripe (T) according to any preceding claim, wherein the optically variable pigments are selected from the group consisting of thin film interference pigments, magnetic thin film interference pigments, interference coated pigments, interference coated pigment particles comprising a magnetic material and mixtures thereof.

4. The security thread or stripe (T) according to any preceding claim further comprising one or more additional layers selected from the group consisting of adhesive layers, lacquers, machine readable layers, hiding layers and combinations thereof.

5. The security thread or stripe (T) according to any preceding claim further comprising one or more protective layers and/or an additional transparent substrate (6) made of one or more plastics or polymers, preferably selected from the group consisting of polyolefins, polyamides, polyesters, polyvinylchlorides (PVC) and mixtures thereof.

6. The security thread or stripe (T) according to any preceding claim, wherein the optically variable layer (1) and the color constant layer (2) are independently selected from the group consisting of radiation curable compositions, thermal drying compositions and combination thereof.

7. The security thread or stripe (T) according to any preceding claim, wherein the indicia (I, G) are independently selected from the group consisting of symbols, alphanumeric symbols, motifs, geometric patterns, letters, words, numbers, logos, drawings and combinations thereof.

8. A process for making a security thread or stripe (T) recited in any one of claims 1 to 7 further comprising a transparent substrate (6), said process comprising a step of laminating a first structure comprising the substrate (4) recited in any one of claims 1 to 7 and the holographic metallic layer (3) recited in any one of claims 1 to 7 with a second structure comprising the transparent substrate (6) recited in any one of claims 5 to 7, the optically variable layer (1) recited in any one of claims 1 to 7 and the color constant layer (2) recited in any one of claims 1 to 7.

9. A use of the security thread or stripe (T) recited in any one of claims 1 to 7 for the protection of a security document against counterfeiting, fraud or illegal reproduction.

10. A security document comprising a security thread or stripe (T) recited in any of claims 1 to 7.

11. A process for producing the security document recited in claim 10, said process
comprising the steps of:
a) producing the security thread or stripe (T) recited in any one of the claims 1 to 7, and
b) at least partially embedding in said security document the security thread or stripe (T) obtained under step a) or a step of mounting the security thread or stripe (T) obtained under step a) on the surface of the security document.

## Patentansprüche

1. Sicherheitsfaden oder -streifen (T), umfassend:
a) eine optisch variable Schicht (1), die unter verschiedenen Sichtwinkeln einen unterschiedlichen Farbeindruck verleiht und aus einer optisch variablen Zusammensetzung besteht, die von etwa 2 bis etwa 40 Gew.-% optisch variablen Pigmenten umfasst, wobei die optisch variable Schicht (1) eine oder mehrere Lücken in der Form von Zeichen (I, G) umfasst oder aus Zeichen besteht, die aus der optisch variablen Zusammensetzung bestehen, wobei die Gewichtsprozentwerte auf das Gesamtgewicht der optisch variablen Zusammensetzung bezogen sind;
b) eine farbkonstante Schicht (2) mit einer Farbe, die dem Farbeindruck der optisch variablen Schicht (1) unter einem Sichtwinkel entspricht, und aus einer farbkonstanten Zusammensetzung besteht, die von etwa 1 bis etwa 20 Gew.-% einem oder mehreren Farbstoffen und/oder von etwa 0,1 bis etwa 45 Gew.-% anorganischen Pigmenten, organischen Pigmenten oder Gemischen davon besteht, wobei die farbkonstante Schicht (2) entweder eine oder mehrere Lücken in der Form von Zeichen (I, G) umfasst oder aus Zeichen (I, G) besteht, die aus der farbkonstanten Zusammensetzung bestehen, wobei die Gewichtsprozentwerte auf das Gesamtgewicht der farbkonstanten Zusammensetzung bezogen sind;
c) eine holografische Metallschicht (3); und
d) ein Substrat (4),
wobei
i) die holografische Metallschicht (3) auf dem Substrat (4) angeordnet ist, und
ii) die farbkonstante Schicht (2) auf der holografischen Metallschicht (3) angeordnet ist und die optisch variable Schicht (1) auf der farbkonstanten Schicht (2) angeordnet ist,
oder die optisch variable Schicht (1) auf der holografischen Metallschicht (3) angeordnet ist und die farbkonstante Schicht (2) auf der optisch variablen Schicht (1) angeordnet ist,
oder die optisch variable Schicht (1) neben der farbkonstanten Schicht (2) liegt und die optisch variable Schicht (1) und die farbkonstante Schicht (2) beide auf der holografischen Metallschicht (3) angeordnet sind, und
wobei ferner die optisch variable Schicht (1), die farbkonstante Schicht (2) und die holografische Metallschicht (3) zumindest teilweise gemeinsam von der Seite des Sicherheitsfadens oder -streifens (T), umfassend die optisch variable Schicht (1) und/oder die farbkonstante Schicht (2), sichtbar sind.

2. Sicherheitsfaden oder -streifen (T) nach Anspruch 1, wobei das Substrat (4) aus einem oder mehreren Kunststoffen oder Polymeren besteht, vorzugsweise aus der Gruppe bestehend aus Polyolefinen, Polyamiden, Polyestern, Polyvinylchloriden und Gemischen davon ausgewählt ist.

3. Sicherheitsfaden oder -streifen (T) nach einem der vorstehenden Ansprüche, wobei die optisch variablen Pigmente aus der Gruppe bestehend aus Dünnfilminterferenzpigmenten, magnetischen Dünnfilminterferenzpigmenten, interferenzbeschichteten Pigmenten, interferenzbeschichteten Pigmentpartikeln, die ein magnetisches Material umfassen, und Gemischen davon ausgewählt sind.

4. Sicherheitsfaden oder -streifen (T) nach einem der vorstehenden Ansprüche, ferner umfassend eine oder mehrere zusätzliche Schichten, die aus der Gruppe bestehend aus Klebstoffschichten, Lacken, maschinenlesbaren Schichten, verbergende Schichten und Kombinationen davon ausgewählt sind.

5. Sicherheitsfaden oder -streifen (T) nach einem der vorstehenden Ansprüche, ferner umfassend eine oder mehrere Schutzschichten und/oder ein zusätzliches transparentes Substrat (6) aus einem oder mehreren Kunststoffen oder Polymeren, vorzugsweise ausgewählt aus der Gruppe bestehend aus Polyolefinen, Polyamiden, Polyestern, Polyvinylchloriden (PVC) und Gemischen davon.

6. Sicherheitsfaden oder -streifen (T) nach einem der vorstehenden Ansprüche, wobei die optisch variable Schicht (1) und die farbkonstante Schicht (2) unabhängig voneinander aus der Gruppe bestehend aus strahlungshärtbaren Zusammensetzungen, thermisch trocknenden Zusammensetzungen und Kombinationen davon ausgewählt sind.

7. Sicherheitsfaden oder -streifen (T) nach einem der vorstehenden Ansprüche, wobei die Zeichen (I, G) unabhängig voneinander aus der Gruppe bestehend aus Symbolen, alphanumerischen Symbolen, Motiven, geometrischen Strukturen, Buchstaben, Wörtern, Ziffern, Logos, Zeichnungen und Kombinationen davon ausgewählt sind.

8. Verfahren zur Herstellung eines Sicherheitsfadens oder -streifens (T) nach einem der Ansprüche 1 bis 7, ferner umfassend ein transparentes Substrat (6), wobei das Verfahren einen Schritt des Laminierens einer ersten Struktur, die das Substrat (4) nach einem der Ansprüche 1 bis 7 und die holografische Metallschicht (3) nach einem der Ansprüche 1 bis 7 umfasst, mit einer zweiten Struktur, die das transparente Substrat (6) nach einem der Ansprüche 5 bis 7, die optisch variable Schicht (1) nach einem der Ansprüche 1 bis 7 und die farbkonstante Schicht (2) nach einem der Ansprüche 1 bis 7, umfasst, umfasst.

9. Verwendung des Sicherheitsfadens oder -streifens (T) nach einem der Ansprüche 1 bis 7 zum Schützen eines Sicherheitsdokuments gegen Fälschung, Täuschung oder rechtswidrige Vervielfältigung.

10. Sicherheitsdokument, umfassend einen Sicherheitsfaden oder -streifen (T) nach einem der Ansprüche 1 bis 7.

11. Verfahren zur Herstellung des Sicherheitsdokuments nach Anspruch 10, wobei das Verfahren die Schritte umfasst:
a) Herstellen des Sicherheitsfadens oder -streifens (T) nach einem der Ansprüche 1 bis 7, und
b) zumindest teilweise Einbetten des bei Schritt a) erhaltenen Sicherheitsfadens oder -streifens (T) in das Sicherheitsdokument oder einen Schritt der Befestigung des bei Schritt a) erhaltenen Sicherheitsfadens oder -streifens (T) auf der Oberfläche des Sicherheitsdokuments.

## Revendications

1. Fil ou bande de sécurité (T) comprenant :
a) une couche optiquement variable (1) conférant une impression de couleur différente à des angles de visualisation différents et étant constituée d'une composition optiquement variable comprenant environ 2 à environ 40 % en poids de pigments optiquement variables, ladite couche optiquement variable (1) comprenant un ou plusieurs espaces sous la forme d'indices (I, G) ou est composée d'indices constitués de la composition optiquement variable, les pourcentages en poids étant basés sur le poids total de la composition optiquement variable ;
b) une couche de couleur constante (2) ayant une couleur assortie à l'impression de couleur de la couche optiquement variable (1) à un angle de visualisation, et étant constituée d'une composition de couleur constante comprenant environ 1 à environ 20 % en poids d'un ou de plusieurs colorants et/ou environ 0,1 à environ 45 % en poids de pigments inorganiques, de pigments organiques ou de mélanges de ceux-ci, ladite couche de couleur constante (2) comprenant un ou plusieurs espaces sous la forme d'indices (I, G) ou est composée d'indices (I, G) constitués de la composition de couleur constante, les pourcentages en poids étant basés sur le poids total de la composition de couleur constante ;
c) une couche holographique métallique (3) ; et
d) un substrat (4),
dans lequel
i) la couche holographique métallique (3) est disposée sur la partie supérieure du substrat (4), et
ii) la couche de couleur constante (2) est disposée sur la partie supérieure de la couche holographique métallique (3) et la couche optiquement variable (1) est disposée sur la partie supérieure de la couche de couleur constante (2),
ou la couche optiquement variable (1) est disposée sur la partie supérieure de la couche holographique métallique (3) et la couche de couleur constante (2) est disposée sur la partie supérieure de la couche optiquement variable (1),
ou la couche optiquement variable (1) est adjacente à la couche de couleur constante (2) et la couche optiquement variable (1) et la couche de couleur constante (2) sont toutes deux disposées sur la partie supérieure de la couche holographique métallique (3), et
dans lequel la couche optiquement variable (1), la couche de couleur constante (2) et la couche holographique métallique (3) sont en outre au moins partiellement visibles conjointement depuis le côté du fil ou de la bande de sécurité (T) comprenant la couche optiquement variable (1) et/ou la couche de couleur constante (2).

2. Fil ou bande de sécurité (T) selon la revendication 1, dans lequel le substrat (4) est constitué d'un ou de plusieurs plastiques ou polymères, de préférence choisis dans le groupe constitué de polyoléfines, de polyamides, de polyesters, de polychlorures de vinyle et de mélanges de ceux-ci.

3. Fil ou bande de sécurité (T) selon une quelconque revendication précédente, dans lequel les pigments optiquement variables sont choisis dans le groupe constitué de pigments interférentiels en couches minces, de pigments interférentiels magnétiques en couches minces, de pigments à revêtement interférentiel, de particules de pigment à revêtement interférentiel comprenant un matériau magnétique et de mélanges de ceux-ci.

4. Fil ou bande de sécurité (T) selon une quelconque revendication précédente comprenant en outre une ou plusieurs couches supplémentaires choisies dans le groupe constitué de couches adhésives, de laques, de couches lisibles par machine, de couches opacifiantes et de combinaisons de celles-ci.

5. Fil ou bande de sécurité (T) selon l'une quelconque des revendications précédentes comprenant en outre une ou plusieurs couches de protection et/ou un substrat transparent supplémentaire (6) constitué d'un ou de plusieurs plastiques ou polymères, de préférence choisis dans le groupe constitué de polyoléfines, de polyamides, de polyesters, de polychlorures de vinyle (PVC) et de mélanges de ceux-ci.

6. Fil ou bande de sécurité (T) selon une quelconque revendication précédente, dans lequel la couche optiquement variable (1) et la couche de couleur constante (2) sont indépendamment choisies dans le groupe constitué de compositions durcissables par rayonnement, de compositions à séchage thermique et de combinaison de celles-ci.

7. Fil ou bande de sécurité (T) selon l'une quelconque des revendications précédentes, dans lequel les indices (I, G) sont indépendamment choisis dans le groupe constitué de symboles, de symboles alphanumériques, de motifs, de motifs géométriques, de lettres, de mots, de nombres, de logos, de dessins et de combinaisons de ceux-ci.

8. Procédé de fabrication d'un fil ou d'une bande de sécurité (T) selon l'une quelconque des revendications 1 à 7 comprenant en outre un substrat transparent (6), ledit procédé comprenant une étape de stratification d'une première structure comprenant le substrat (4) selon l'une quelconque des revendications 1 à 7 et la couche holographique métallique (3) selon l'une quelconque des revendications 1 à 7 avec une deuxième structure comprenant le substrat transparent (6) selon l'une quelconque des revendications 5 à 7, la couche optiquement variable (1) selon l'une quelconque des revendications 1 à 7 et la couche de couleur constante (2) selon l'une quelconque des revendications 1 à 7.

9. Utilisation du fil ou de la bande de sécurité (T) selon l'une quelconque des revendications 1 à 7 pour la protection d'un document de sécurité contre la contrefaçon, la fraude ou la reproduction illégale.

10. Document de sécurité comprenant un fil ou une bande de sécurité (T) selon l'une quelconque des revendications 1 à 7.

11. Procédé de production du document de sécurité selon la revendication 10, ledit procédé comprenant les étapes suivantes :
a) la production du fil ou de la bande de sécurité (T) selon l'une quelconque des revendications 1 à 7, et
b) l'intégration au moins partielle dans ledit document de sécurité du fil ou de la bande de sécurité (T) obtenue dans l'étape a) ou une étape de montage du fil ou de la bande de sécurité (T) obtenue à l'étape a) sur la surface du document de sécurité.
